# NOUVEAU FASCICULE DE BREVET EUROPEEN

(11) **EP 1 150 063 B2**
(45) Date de publication et mention de la décision concernant l'opposition: **15.08.2012**
(45) Mention de la délivrance du brevet: 13.02.2008
(21) Numéro de dépôt: 01400828.8
(22) Date de dépôt: 30.03.2001
(51) Int. Cl.: F21S 8/10, F21V 5/04, F21V 7/00

(54) **Dispositif de signalisation à lampe ville pour véhicule automobile et projecteur incorporant un tel dispositif**
Signalvorrichtung mit Begrenzungslicht für Kraftfahrzeug und Scheinwerfer mit solcher Vorrichtung
Signaling device with position lamp for automotive vehicle and headlamp including such device

(30) Priorité: 28.04.2000 FR 0005491
(43) Date de publication de la demande: 31.10.2001
(73) Titulaire: VALEO VISION, 93012 Bobigny Cedex (FR)
(72) Inventeur: Dejardin, Marc, 93012 Bobigny Cédex (FR); Herbin, Cyril, 93012 Bobigny Cédex (FR); Grigorescu, Benny, 93012 Bobigny Cédex (FR); Marchal, Yves, 93012 Bobigny Cédex (FR)
(74) Mandataire: Hervouet, Sylvie

(56) Documents cités:
- DE-A- 3 503 585
- DE-A- 19 811 961
- DE-A1- 1 684 277
- DE-A1- 3 045 232
- DE-A1- 4 112 194
- DE-C- 930 612
- DE-U1- 29 813 542
- GB-A- 2 186 957
- US-A- 4 728 775
- US-A- 5 481 409

## Description

L'invention concerne les dispositifs de signalisation pour véhicule.

Parmi les fonctions de signalisation réglementaires que doivent assurer les véhicules automobiles, on connaît la fonction dite de signalisation urbaine ou lampe-ville.

Cette fonction est souvent assurée au moyen d'une lampe positionnée de façon décentrée en regard du réflecteur d'un projecteur du véhicule.

Dans le brevet US 4728775, une lampe est positionnée de façon décentrée par rapport au réflecteur d'un projecteur. En outre une deuxième lampe est prévue. DE 1684277 U décrit les caractéristiques du préambule de la revendication 1.

Toutefois, ces solutions ne sont pas toujours souhaitable en termes de style automobile car la lampe-ville est alors très visible ou inadaptée sur le plan technique, par exemple pour des questions d'encombrement.

Un but de l'invention est de fournir une solution d'un type différent pour assurer la fonction de signalisation urbaine.

En vue de la réalisation de ce but, on prévoit selon l'invention un dispositif de signalisation pour véhicule, comportant un réflecteur et une lampe apte à émettre un rayonnement vers le réflecteur pour assurer une fonction d'indication de changement de direction, le dispositif comportant en outre une deuxième lampe s'étendant dans une cavité ménagée dans la face réfléchissante dudit réflecteur.

Ainsi, l'invention offre de nouvelles possibilités pour loger la lampe-ville. De plus, esthétiquement, la lampe-ville est moins visible que sur les solutions l'associant au réflecteur du projecteur.

En outre, il n'est plus besoin de tenir compte de la lampe-ville dans la conception du projecteur.

Avantageusement, la deuxième lampe s'étend dans une cavité du réflecteur.

Avantageusement, la deuxième lampe est apte à assurer une fonction de signalisation.

Avantageusement, la deuxième lampe est apte à assurer une fonction de signalisation urbaine.

Avantageusement, la deuxième lampe est apte à assurer une fonction d'éclairage.

Avantageusement, la deuxième lampe est apte à assurer une fonction d'éclairage infrarouge.

Avantageusement, le dispositif comporte une lentille, notamment une lentille de Fresnel, s'étendant en regard de la lampe associée à la fonction d'indication de changement de direction.

Avantageusement, le dispositif comporte une lentille, notamment une lentille de Fresnel, s'étendant en regard de la deuxième lampe.

On prévoit également selon l'invention un ensemble pour véhicule comportant un projecteur et comportant en outre un dispositif de signalisation selon l'invention.

Avantageusement, le projecteur comporte un réflecteur associé à une fonction d'éclairage et d'une seule pièce avec le réflecteur du dispositif de signalisation.

D'autres caractéristiques et avantages de l'invention apparaîtront encore dans la description suivante d'un mode préféré de réalisation et de variantes donnés à titre d'exemples non limitatifs. Aux dessins annexés :
- la figure 1 est une vue partielle de face d'un exemple de réalisation d'un ensemble d'éclairage et de signalisation ne faisant pas partie de l'invention;
- la figure 2 est une vue en section selon le plan II-II de l'ensemble de la figure 1 ;
- la figure 3 est une vue partielle en section verticale suivant le plan III-III de l'ensemble de la figure 1 ;
- la figure 4 est une vue en perspective isométrique du dispositif de signalisation de l'ensemble de la figure 1, seul ;
- la figure 5 est une vue à plus grande échelle d'un détail de la figure 4 avec la lampe-ville ; et
- la figure 6 est une vue analogue à la figure 2 montrant un mode préféré de réalisation de l'invention.

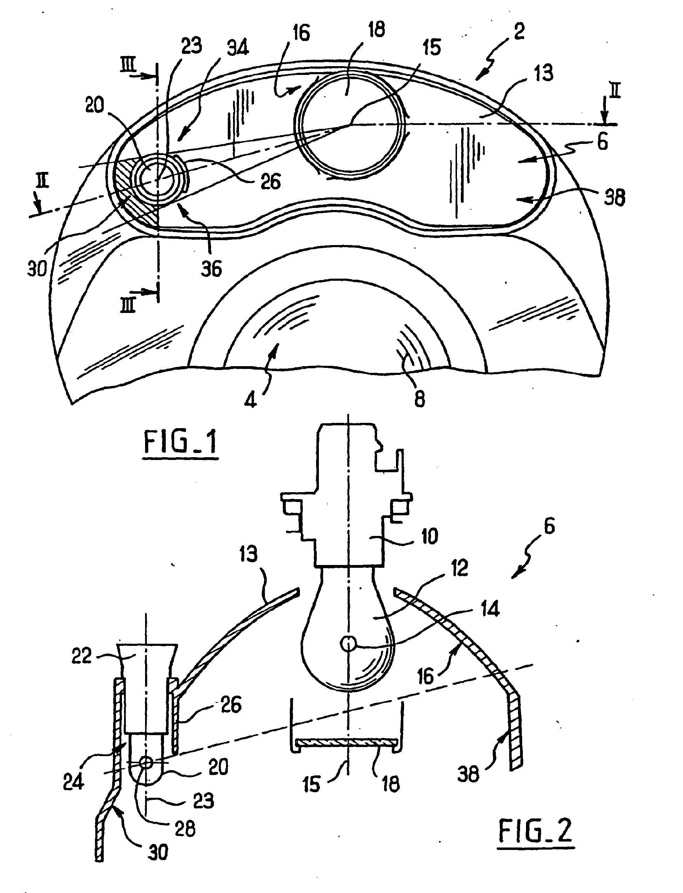

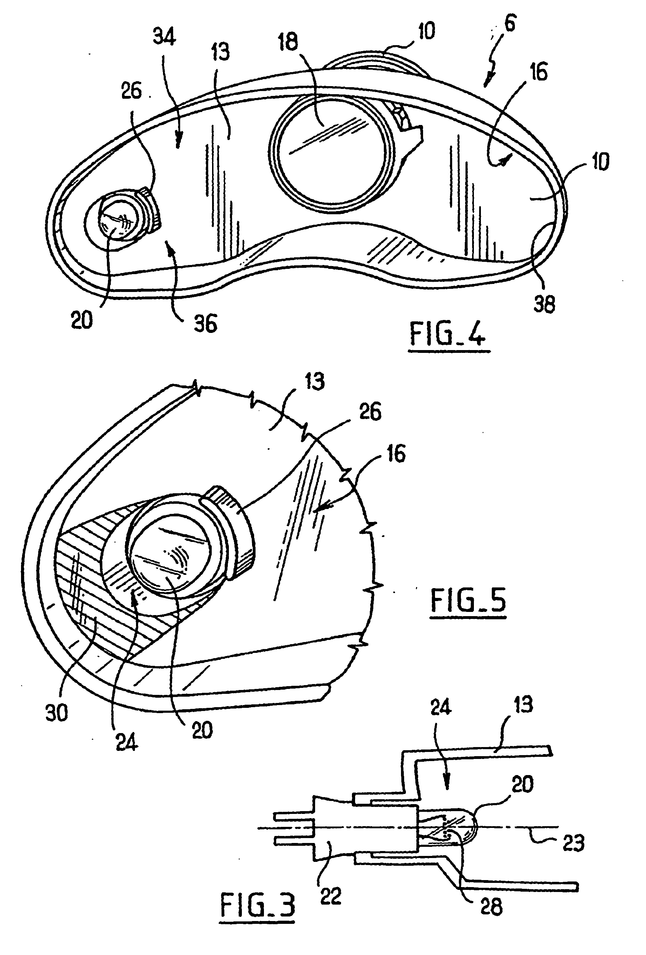

On va décrire un ensemble d'éclairage et de signalisation en référence aux figures 1 à 5. L'ensemble d'éclairage et de signalisation 2 comporte un dispositif d'éclairage 4 et un dispositif de signalisation 6.

Le dispositif d'éclairage 4 est ici apte à assurer la fonction code et ce de façon connue en soi. Il comporte notamment un réflecteur non illustré à face réfléchissante en forme d'ellipsoïde et une lentille 8.

Le dispositif de signalisation 6 comporte un porte-lampe 10 et une lampe 12 fixée à celui-ci et par exemple du type PY21W à filament 14. En regard de la lampe 12, le dispositif comporte un réflecteur 13 présentant une face réfléchissante 16 de géométrie adaptée d'axe 15 et par exemple engendrée de façon connue en soi par une ou deux génératrices paraboliques focalisées sur le filament 14 afin de réfléchir à l'infini le faisceau émis par la lampe. Le dispositif comporte en outre une lentille de Fresnel 18 s'étendant en regard de la lampe 12, au droit de celle-ci mais pas au droit du réflecteur afin de ne pas intercepter le faisceau réfléchi par ce dernier et de n'intercepter que le faisceau émanant directement de la lampe. La lentille 18 connue en soi, envoie à l'infini sous la forme d'un faisceau à rayons parallèles le faisceau à rayons divergents allant directement du filament à la lentille. La lampe 12 assure la fonction d'indication de changement de direction ou encore feu clignotant.

Le dispositif de signalisation 6 comporte en outre une lampe 20 et un porte-lampe 22 s'étendant dans une cavité 24 ménagée dans la face réfléchissante 16 du réflecteur, à une position décentrée par rapport à l'axe 15. L'axe 23 de la lampe 20 est distant de l'axe 15 mais parallèle à celui-ci.

Le réflecteur 13 comporte un muret 26 venu de moulage à partir de la face réfléchissante 16 et s'étendant en saillie de celle-ci. Le muret a une forme en secteur de cylindre d'axe 23. Le secteur est géométriquement porté par le cylindre définissant la cavité 24. Le muret 26 prolonge cette cavité vers l'avant. Le muret forme un écran entre le filament 28 de la lampe 20 et celui 14 de la première lampe 12 qu'il masque l'un à l'autre. Il masque également certaines zones respectives de la face réfléchissante 16 à l'égard de l'un ou l'autre des filaments 14 et 28. La deuxième lampe 20 est apte à assurer en coopération avec le réflecteur 13 la fonction de signalisation urbaine ou lampe-ville.

La face réfléchissante 16 du réflecteur comporte dans sa partie adjacente à la lampe-ville 20 et opposée à la lampe de clignotant 12 une zone 30 apte à réfléchir à l'infini sous forme d'un faisceau à rayons parallèles le faisceau émis par la lampe-ville. Cette zone est limitée en vue de face par un secteur angulaire dont le sommet passe par l'axe 15 et dont les côtés sont tangents au bord circulaire de la cavité 24. On connaît des surfaces aptes à réfléchir le faisceau de la lampe-ville 20 comme précité, par exemple un paraboloïde de révolution focalisé sur le filament 28. La lampe-ville 20 n'est ici associée à aucune lentille.

Certaines zones du réflecteur 16 sont aptes à réfléchir des rayons émis par les deux filaments 14, 28. C'est le cas notamment des zones 34, 36 au-dessus et au-dessous de la lampe-ville 20 et de la zone 38 située à l'opposé de celle-ci, près de la lampe 12.

Le dispositif de signalisation 6 est ici contigu au dispositif d'éclairage 4 et placé au-dessus de celui-ci.

Le réflecteur 16 associé à la signalisation et celui associé à l'éclairage sont ici d'une seule pièce. L'ensemble comporte en outre une glace ainsi qu'un boîtier classiques non illustrés.

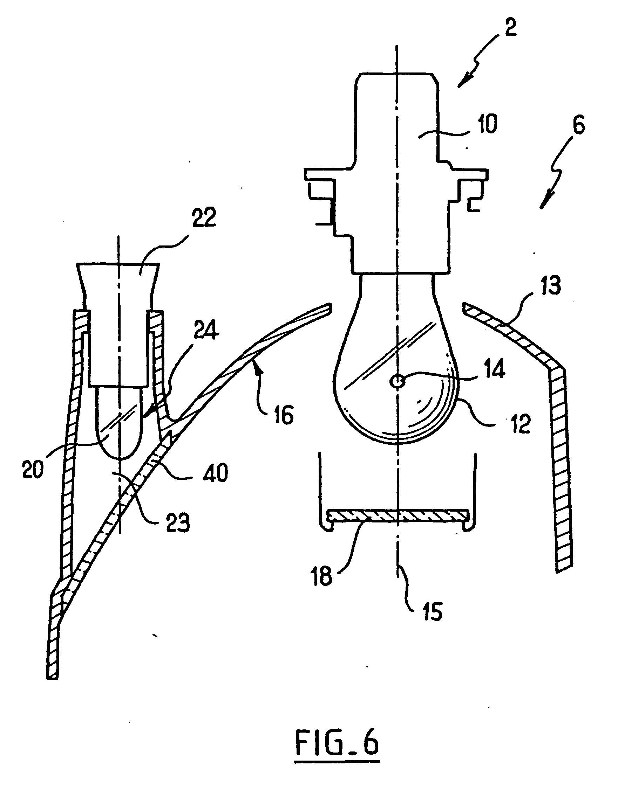

On a illustré un mode de réalisation de l'invention à la figure 6. Ce mode de réalisation est très proche de l'ensemble d'éclairage et de signalisation précédent à de nombreux égards. Toutefois, cette fois la cavité 24 est si profonde et la lampe-ville 20 si enfoncée dans cette cavité qu'elle n'émet plus de rayons en direction de la face réfléchissante 16 du réflecteur. La cavité 24 est cette fois obturée par une lentille de Fresnel 40 connue en soi, focalisée sur le filament de la lampe-ville et qui transforme le faisceau à rayons divergents de la lampe-ville 20 en un faisceau à rayons parallèles dirigés à l'infini et ce bien que le plan de la lentille 40 soit fortement incliné par rapport à l'axe 23 de la lampe. Une telle lentille permet notamment de dissimuler la lampe-ville encore davantage à la vue. On peut remplacer la lentille 40 par un cache optique transparent.

Dans les deux modes de réalisation qui précèdent, le dispositif de signalisation est destiné à s'étendre à l'avant du véhicule.

La fonction clignotant est associée à sa couleur réglementaire, à savoir ambre. Cette couleur est par exemple obtenue par la coloration dans la masse du ballon de la lampe 12, ou au moyen d'un élément coloré recouvrant la lampe, par exemple une bonnette. La fonction de signalisation urbaine est associée à la couleur réglementaire blanche.

Bien entendu, on pourra apporter à l'invention de nombreuses modifications sans sortir du cadre de celle-ci.

Le muret pourra être rapporté par clipsage.

La deuxième lampe pourra être adaptée pour assurer une fonction de signalisation ou une fonction d'éclairage, par exemple une fonction d'éclairage infrarouge, en association avec un détecteur infrarouge d'un type connu en soi, embarqué sur le véhicule. Elle pourra être associée à un réflecteur dans la cavité de la deuxième lampe pour diriger à l'infini le faisceau de la deuxième lampe.

## Revendications

1. Dispositif de signalisation (6) pour véhicule, comportant un réflecteur (13) et une lampe (12) apte à émettre un rayonnement vers le réflecteur pour assurer une fonction d'indication de changement de direction, comportant en outre une deuxième lampe (20) s'étendant dans une cavité (24) ménagée dans la face réfléchissante (16) dudit réflecteur, **caractérisé en ce que** la cavité (24) est si profonde et la deuxième lampe (20) si enfoncée dans cette cavité que la lampe ville n'est plus apte à émettre un rayonnement vers la face réfléchissante (16) dudit réflecteur (13).

2. Dispositif selon la revendication 1, **caractérisé en ce que** la dite cavité (24) est obturée par une lentille (40) de Fresnel, focalisée sur le filament de ladite deuxième lampe (20).

3. Dispositif selon l'une quelconque des revendications précédentes, **caractérisé en ce que** la deuxième lampe (20) est apte à assurer une fonction de signalisation.

4. Dispositif selon l'une quelconque des revendications précédentes, **caractérisé en ce que** la deuxième lampe (20) est apte à assurer une fonction de signalisation urbaine.

5. Dispositif selon l'une quelconque des revendications 1 à 2, **caractérisé en ce que** la deuxième lampe (20) est apte à assurer une fonction d'éclairage.

6. Dispositif selon la revendication 5, **caractérisé en ce que** la deuxième lampe est apte à assurer une fonction d'éclairage infrarouge.

7. Dispositif selon l'une quelconque des revendications 1 à 6, **caractérisé en ce qu'**il comporte une lentille (18), notamment une lentille de Fresnel, s'étendant en regard de la lampe (12) associée à la fonction d'indication de changement de direction.

8. Dispositif selon l'une quelconque des revendications 1 à 7, **caractérisé en ce qu'**il comporte une lentille (40) de Fresnel, s'étendant en regard de la deuxième lampe (20).

9. Dispositif selon l'une quelconque des revendications précédentes, **caractérisé en ce que** la face réfléchissante (16) du réflecteur (13) a un axe de géométrie (15), et un ce que la deuxième lampe (20) a un axe (23) distant dudit axe de géométrie (15) mais parallèle à celui-ci.

10. Ensemble (2) pour véhicule comportant un projecteur (4), **caractérisé en ce qu'**il comporte en outre un dispositif de signalisation (6) selon l'une quelconque des revendications 1 à 9.

11. Ensemble selon la revendication 10, **caractérisé en ce que** le projecteur (4) comporte un réflecteur associé à une fonction d'éclairage et d'une seule pièce avec le réflecteur (13) du dispositif de signalisation (6).

## Claims

1. Signalling device (6) for a vehicle, comprising a reflector (13) and a lamp (12) capable of radiating towards the reflector in order to provide a change of direction indication function, additionally comprising a second lamp (20) extending into a cavity (24) provided in the reflective surface (16) of the said reflector, **characterised in that** the cavity (24) is sufficiently deep and the second lamp (20) is inserted sufficiently far into the said cavity that the position lamp is no longer capable of radiating towards the reflective surface (16) of the said reflector (13).

2. Device according to claim 1, **characterised in that** the said cavity (24) is closed by a Fresnel lens (40) which is focussed on the filament of the said second lamp (20).

3. Device according to any one of the preceding claims, **characterised in that** the second lamp (20) is capable of providing a signalling function.

4. Device according to any one of the preceding claims, **characterised in that** the second lamp (20) is capable of providing an urban signalling function.

5. Device according to any one of claims 1 to 2, **characterised in that** the second lamp (20) is capable of providing a lighting function.

6. Device according to claim 5, **characterised in that** the second lamp is capable of providing an infrared lighting function

7. Device according to any one of claims 1 to 6, **characterised in that** it comprises a lens (18), in particular a Fresnel lens, extending opposite the lamp (12) associated with the change of direction indication function.

8. Device according to any one of claims 1 to 7, **characterised in that** it comprises a Fresnel lens (40) extending opposite the second lamp (20).

9. Device according to any one of the preceding claims, **characterised in that** the reflective surface (16) of the reflector (13) has an axis of geometry (15), and **in that** the second lamp (20) has an axis (23) at some distance from the said axis of geometry (15) but parallel thereto.

10. Assembly (2) for a vehicle comprising a headlight (4), **characterised in that** it additionally comprises a signalling device (6) according to any one of claims 1 to 9.

11. Assembly according to claim 10, **characterised in that** the headlight (4) comprises a reflector associated with a lighting function and integral with the reflector (13) of the signalling device (6).

## Patentansprüche

1. Signalvorrichtung (6) für Kraftfahrzeuge, mit einem Reflektor (13) und einer Lampe (12), die in Richtung des Reflektors Lichtstrahlen auszusenden vermag, um die Funktion eines Fahrtrichtungsanzeigers auszuführen, ferner mit einer zweiten Lampe (20), die sich in einer Höhlung (24) erstreckt, die in der Reflexionsfläche (16) des Reflektors ausgebildet ist,
**dadurch gekennzeichnet, dass** die Höhlung (24) so tief ist und die zweite Lampe (20) so weit in die Höhlung eingeführt ist, dass die Begrenzungslichtquelle keine Lichtstrahlen mehr in Richtung der Reflexionsfläche (16) des Reflektors (13) auszusenden vermag.

2. Vorrichtung nach Anspruch 1,
**dadurch gekennzeichnet, dass** die Höhlung (24) durch eine Fresnel-Linse (40) verschlossen ist, die auf die Glühwendel der zweiten Lampe (20) fokussiert ist.

3. Vorrichtung nach einem der vorhergehenden Ansprüche,
**dadurch gekennzeichnet, dass** die zweite Lampe (20) eine Signalfunktion auszuführen vermag.

4. Vorrichtung nach einem der vorhergehenden Ansprüche,
**dadurch gekennzeichnet, dass** die zweite Lampe (20) eine Stadtverkehr-Signalfunktion auszuführen vermag.

5. Vorrichtung nach einem der Ansprüche 1 bis 2,
**dadurch gekennzeichnet, dass** die zweite Lampe (20) eine Beleuchtungsfunktion auszuführen vermag.

6. Vorrichtung nach Anspruch 5,
**dadurch gekennzeichnet, dass** die zweite Lampe eine Infrarotbeleuchtungsfunktion auszuführen vermag.

7. Vorrichtung nach einem der Ansprüche 1 bis 6,
**dadurch gekennzeichnet, dass** sie eine Linse (18), insbesondere eine Fresnel-Linse, aufweist, die sich gegenüber der Lampe (12) erstreckt, welche der Fahrtrichtungsanzeigerfunktion zugeordnet ist.

8. Vorrichtung nach einem der Ansprüche 1 bis 7,
**dadurch gekennzeichnet**, sie eine Fresnel-Linse (40) aufweist, die sich gegenüber der zweiten Lampe (20) erstreckt.

9. Vorrichtung nach einem der vorhergehenden Ansprüche,
**dadurch gekennzeichnet, dass** die Reflexionsfläche (16) des Reflektors (13) eine geometrische Achse (15) hat, und dass die zweite Lampe (20) eine von der geometrischen Achse (15) entfernte, zu dieser jedoch parallele Achse hat.

10. Einheit (2) für Kraftfahrzeuge mit einem Scheinwerfer (4),
**dadurch gekennzeichnet, dass** sie ferner eine Signalvorrichtung (6) nach einem der Ansprüche 1 bis 9 umfasst.

11. Einheit nach Anspruch 10,
**dadurch gekennzeichnet, dass** der Scheinwerfer (4) einen Reflektor umfasst, der einer Beleuchtungsfunktion zugeordnet und mit dem Reflektor (13) der Signalvorrichtung (6) einstückig ausgebildet ist.
